# EUROPÄISCHE PATENTSCHRIFT

(11) **EP 3 247 502 B1**
(45) Veröffentlichungstag und Bekanntmachung des Hinweises auf die Patenterteilung: **01.01.2020**
(21) Anmeldenummer: 16700387.0
(22) Anmeldetag: 13.01.2016
(51) Int. Cl.: B05B 5/04

(54) **GLOCKENTELLER ODER LENKLUFTRING MIT ISOLIERENDER BESCHICHTUNG**
BELL CUP OF A ROTARY ATOMIZER OR DEFLECTING AIR RING WITH AN ISOLATING COATING
CLOCHE D'UN PULVÉRISATEUR ROTATIF OU BAGUE DE GUIDAGE D'AIR AVEC REVÊTEMENT ISOLANTE

(30) Priorität: 21.01.2015 DE 102015000709
(43) Veröffentlichungstag der Anmeldung: 29.11.2017
(73) Patentinhaber: Dürr Systems AG, 74321 Bietigheim-Bissingen (DE)
(72) Erfinder: SEIZ, Bernhard, 74348 Lauffen (DE); BAUMANN, Michael, 74223 Flein (DE); NOLTE, Hans-Jürgen, 74354 Besigheim (DE)
(74) Vertreter: v. Bezold & Partner Patentanwälte - PartG mbB
(86) Internationale Anmeldenummer: PCT/EP2016/000054
(87) Internationale Veröffentlichungsnummer: WO 2016/116261

(56) Entgegenhaltungen:
- EP-A1- 1 038 588
- EP-A1- 2 213 378
- DE-A1- 3 129 151
- DE-A1-102009 013 979
- JP-A- 2001 113 207
- US-A- 5 632 448

## Beschreibung

Die Erfindung betrifft einen Rotationszerstäuber einer Beschichtungsanlage mit einem Glockenteller und einem Lenkluftring, wobei der Glockenteller und/oder der Lenkluftring mit einem nicht-metallischem Material zur Funkenvermeidung versehen ist.

Zum allgemeinen Stand der Technik kann zunächst auf die DE 10 2009 013 979 A1, die DE 10 2008 027 997 A1 und die US 2010 / 0 211 205 A1 verwiesen werden.

Rotationszerstäuber zur Lackierung von Kraftfahrzeugkarosserien und Anbauteilen hierfür sind im Stand der Technik in den unterschiedlichsten Ausführungsformen bekannt. Derartige Rotationszerstäuber umfassen üblicherweise einen im Betrieb rotierenden metallischen Glockenteller zur Zerstäubung des Lacks und zur Abgabe eines Lacksprühstrahls und einen im Betrieb nicht-rotierenden metallischen Lenkluftring zur Abgabe eines Lenkluftstroms zur Formung des Lacksprühstrahls. Es gibt auch Lenkluftringe aus Kunststoff. Diese werden z. B. bei der Außenaufladung genutzt (leitfähige Lacke). Der Nachteil der Lenkluftringe aus Kunststoff ist, dass die Standzeit im harten Lackierbetrieb niedriger ist. Beim Reinigen des Lenkluftrings oder gar beim "Reinigen" von verstopften Lenkluftbohrungen kommt es sehr schnell zu Beschädigungen der Lenkluftringe. Aus diesem Grund werden Lenkluftringe, soweit möglich (Lösemittellack, Direktaufladung, Wasserlack oder beim Lackieren ohne Hochspannung), aus harten und leichten Werkstoffen hergestellt. Der im Betrieb unter Druck stehende Lenkluftring ist hinter dem Glockenteller angeordnet.

Beschichtungsanlagenbauteile der hier betrachteten Gattung wie Glockenteller oder Lenkluftringe sind bekannt aus DE 31 29 151 A1, EP 2 213 378 A1, EP 1 038 588 A1, US 5,632,448 A und JP 2001 113207 A.

Die eingangs schon erwähnte DE 10 2009 013 979 A1 offenbart eine Elektrodenanordnung für einen elektrostatischen Rotationszerstäuber, die ein elektrostatisches Feld erzeugt, welches über eine Gehäuseoberfläche in Richtung zu auf Erdpotential liegenden Bauteilen wie z. B. dem metallischen Glockenteller oder einer Roboterhandachse fließende Entladungsströme verursacht. Zur Dämpfung des Entladungsstroms kann der metallische Glockenteller von einem isolierenden Lenkluftring abgedeckt sein, so dass nicht zu viel Strom von den Elektroden über den Glockenteller abfließt, dessen Absprühkante hierbei als Koronazündelektrode dient.

Normalerweise kommt es im Betrieb zu keinem Kontakt zwischen dem rotierenden Glockenteller und dem Lenkluftring. Allerdings besteht in der Praxis insbesondere für Ausführungsformen, bei denen der Glockenteller und der Lenkluftring nur sehr gering voneinander beabstandet sind, die Gefahr, dass sich metallische Teile des Glockentellers und des Lenkluftrings kontaktieren. Hierzu kann es insbesondere dann kommen, wenn der Lenkluftring nicht sachgemäß montiert wurde und sich im Betrieb löst oder lockert. Dadurch kann es zu einem Metall-auf-Metall-Kontakt zwischen dem rotierenden Glockenteller und dem Lenkluftring und in der Folge zu einer Funkenentstehung und einem Funkenflug kommen. Die Funken können insbesondere in Lösemittelzonen zum Auslösen der Brandschutzanlage führen. Ein weiteres Szenario ist, dass dieser funkensprühende Zerstäuber in ein Reinigungsgerät fährt und dort von außen mit brennbarem Lack bzw. Spülmittel besprüht wird. Die Gefahr eines Brandes ist in diesem Fall besonders groß.

Eine Aufgabe der Erfindung ist es, eine Möglichkeit zu schaffen, mittels der die Gefahr der Funkenentstehung und/oder des Funkenflugs reduziert oder sogar gänzlich vermieden werden kann.

Diese Aufgabe kann mit den Merkmalen der unabhängigen Ansprüche gelöst werden. Vorteilhafte Weiterbildungen der Erfindung können den Unteransprüchen und der folgenden Beschreibung bevorzugter Ausführungsformen der Erfindung entnommen werden.

Die Erfindung betrifft die allgemeine technische Lehre, einen im Betrieb ungewollten Metall-auf-Metall-Kontakt zwischen einem rotierenden Glockenteller und einem Lenkluftring und/oder eine dadurch verursachte Funkenentstehung mittels Anordnung eines nicht-metallischen Materials an dem Glockenteller und/oder dem Lenkluftring zu vermeiden. Selbst wenn sich z. B. der Lenkluftring im Betrieb ungewollt löst oder lockert und den rotierenden Glockenteller kontaktiert, kommt es zu keinem Metall-auf-Metall-Kontakt und/oder zu keiner Funkenentstehung.

Die Erfindung schafft ein Beschichtungsanlagenbauteil für einen zweckmäßig elektrostatischen Rotationszerstäuber.

Das Beschichtungsanlagenbauteil kann ein Glockenteller sein.

Der Glockenteller ist vorzugsweise ausgeführt, um im Betriebszustand vor einem Lenkluftring angeordnet zu werden und/oder um im Betriebszustand einen Lenkluftring axial zu überlappen. Alternativ oder ergänzend dient der Glockenteller insbesondere zur Zerstäubung eines Beschichtungsmittels und zur Abgabe eines Beschichtungsmittel-Sprühstrahls (z. B. Sprühnebel). Das Beschichtungsmittel ist vorzugsweise ein Lack.

Das Beschichtungsanlagenbauteil kann ein Lenkluftring sein.

Der Lenkluftring ist vorzugsweise ausgeführt, um im Betriebszustand hinter einem Glockenteller angeordnet zu werden und/oder um im Betriebszustand einen Glockenteller axial zu überlappen. Alternativ oder ergänzend umfasst der Lenkluftring insbesondere zumindest eine Austrittsöffnung zur Abgabe eines Lenkluftstroms zur Formung des Beschichtungsmittel-Sprühstrahls.

Das Beschichtungsanlagenbauteil umfasst einen metallischen Grundkörper und zeichnet sich insbesondere dadurch aus, dass der metallische Grundkörper an seiner Außenseite mit einem nicht-metallischen Material versehen ist. Das nicht-metallische Material ist an dem Beschichtungsanlagenbauteil selbst aufgebracht.

Das nicht-metallische Material ist zweckmäßig ausgebildet und angeordnet, um im Betrieb einen insbesondere Funken-erzeugenden Metall-auf-Metall-Kontakt zwischen dem Glockenteller und dem Lenkluftring und/oder eine Funkenentstehung zu vermeiden, wenn sich der Lenkluftring im Betrieb ungewollt löst oder lockert und den rotierenden Glockenteller kontaktiert.

Dadurch, dass der Glockenteller im Betrieb rotiert, ist es zwar möglich, dass das nicht-metallische Material zumindest geringfügig abgetragen wird, aber nicht bis zum metallischen Grundkörper, so dass ein Metall-auf-Metall-Kontakt und/oder eine Funkenentstehung verhindert werden kann. Der Abtrag stellt gleichzeitig eine optisch einfache Kontrollmöglichkeit dar, ob es zu einer Berührung kam oder nicht. Das nicht-metallische Material muss lackverträglich sein, auch beim Abrieb, insbesondere Labs-frei (frei von lackbenetzungsstörende Substanzen.

Die Dicke des nicht-metallischen Materials ist also vorzugsweise ausreichend, um nicht bis zum metallischen Grundkörper hin abgetragen zu werden, wenn sich der Lenkluftring im Betrieb ungewollt löst oder lockert und den rotierenden Glockenteller kontaktiert.

Im Rahmen der Erfindung kann es zu einem Metall-auf-NichtMetall-Kontakt oder zu einem Nicht-Metall-auf-Nicht-Metall-Kontakt kommen.

Es ist möglich, dass das nicht-metallische Material ein Kunststoff ist.

Das nicht-metallische Material kann in Form einer nicht-metallischen, zweckmäßig relativ dünnen Beschichtung auf dem Grundkörper ausgebildet sein. Die Beschichtung kann z. B. eine Dicke von größer als 0,1mm und/oder kleiner als 1,5mm aufweisen.

Ebenso kann das nicht-metallische Material in Form eines nicht-metallischen, zweckmäßig relativ dicken Einsatzes (insert) oder Aufsatzes (put-on part) an dem Grundkörper ausgebildet sein. Der Ein- oder Aufsatz kann z. B. eine Dicke von größer als 0,5mm und/oder kleiner als 10mm aufweisen. Der Einsatz kann z. B. eine nicht-metallische Füllung sein, während der Aufsatz z. B. ein nicht-metallischer kronen- oder kappenförmiger Aufsatz sein kann.

Der nicht-metallische Einsatz dient vorzugsweise zur Anordnung in einer frontseitigen Aussparung im Lenkluftring.

Der nicht-metallische Aufsatz dient vorzugsweise zum insbesondere kappen- oder kronenförmigen Aufbringen auf einen rückseitigen, nach hinten abstehenden Abschnitt des Glockentellers.

Das nicht-metallische Material ist vorzugsweise ringförmig umlaufend an dem Beschichtungsanlagenbauteil angeordnet, so dass selbst bei im Betrieb rotierendem Glockenteller und einem ungewollten Lösen oder Lockern des Lenkluftrings ein Metall-auf-Metall-Kontakt zwischen dem Glockenteller und dem Lenkluftring verhindert werden kann.

Der Grundkörper ist zweckmäßig aus Titan oder Edelstahl (z. B. V2A bzw. V4A) hergestellt.

Das nicht-metallische Material, insbesondere der Kunststoff, kann zweckmäßig ausgewählt werden aus der Gruppe umfassend: thermoplastischer Kunststoff, organisches Polymer, Polyoxymethylen (POM), Polyetheretherketon (PEEK), Polyamid (PA), Polycarbonat (PC), Polybutylenterephthalat (PBT), Polymethylpenten (PMP), Polytetrafluorethylen (PTFE) und/oder Ethylen-Chlortrifluorethylen-Copolymer (Halar®/ECTFE).

Es ist möglich, dass unter dem nicht nicht-metallischen Material eine z. B. elektrostatische Schicht ausgebildet ist, so dass zweckmäßig das nicht-metallische Material auf der z. B. elektrostatischen Schicht aufgebracht ist. Die Schicht kann ferner zweckmäßig zur Verbesserung der Haftung des nicht-metallischen Materials auf dem Beschichtungsanlagenbauteil dienen.

Das nicht-metallische Material und/oder die zuvor genannte Schicht kann vorzugsweise dazu dienen, dass keine unterschiedlichen Potenziale an den unterschiedlichen Werkstoffen am Beschichtungsanlagenbauteil (z. B. am Lenkluftring) auftreten können, wodurch unkontrollierte Entladungen vermieden werden können.

Das nicht-metallische Material ist insbesondere elektrisch leitfähig und vorzugsweise nicht dielektrisch. Die dielektrische Leitfähigkeit kann z. B. ca. 50 - 100kOhm bei einer Prüfspannung von 30 - 70V betragen.

Das nicht-metallische Material kann z. B. eine Breite von kleiner als 50mm; 40mm; 30mm; 20mm; 15mm; 10mm; 7,5mm; 5mm; 4mm; oder 3mm aufweisen.

Es ist möglich, dass die Dicke (Stärke) des nicht-metallischen Materials größer ist als 0,1mm; 0,2mm; 0,3mm; 0,4mm; 0,5mm; 0,6mm; 0,7mm; 0,8mm; 1,0mm; 1,2mm; oder 1,4mm und somit insbesondere ausreichend, um nicht bis zum metallischen Grundkörper abgetragen zu werden, wenn es im Betrieb durch den Kontakt mit dem rotierenden Glockenteller zumindest geringfügig abgetragen wird.

Die Dicke des nicht-metallischen Materials kann z. B. kleiner sein als 10mm; 7,5mm; 5,0mm; 4,0mm; 3,0mm; 2mm; 1,5mm; oder 0,5mm.

Das nicht-metallische Material ist zweckmäßig an oder in der Frontseite des Lenkluftrings angeordnet.

Die Frontseite des Lenkluftrings entspricht der Seite, die im Betriebszustand und/oder im montierten Zustand dem Glockenteller zugewandt ist.

Es ist möglich, dass der Lenkluftring mit einer Aussparung versehen ist und die Aussparung vorzugsweise zur Aufnahme eines rückseitigen, nach hinten abstehenden Abschnitts des Glockentellers dient und/oder zur Aufnahme des nicht-metallischen Materials.

Der nach hinten abstehende Abschnitt des Glockentellers kann insbesondere so in der Aussparung aufgenommen werden, dass er axial in die Aussparung hineinragt und/oder so, dass sich der Glockenteller und der Lenkluftring axial überlappen.

Die Aussparung im Rahmen der Erfindung kann also vorzugsweise zur Aufnahme eines rückseitigen, nach hinten abstehenden Abschnitts des Glockentellers dienen und/oder zur Aufnahme des nicht-metallischen Materials.

Die Aussparung kann im Rahmen der Erfindung z. B. zwei Aufnahmebereiche aufweisen, nämlichen einen zweckmäßig hinteren für das nicht-metallische Material und einen zweckmäßig vorderen für den rückseitigen, nach hinten abstehenden Abschnitt des Glockentellers.

Die Aussparung kann allerdings auch z. B. nur einen Aufnahmebereich aufweisen, der zur quasi gemeinsamen Aufnahme des nicht-metallischen Materials und des rückseitigen, nach hinten abstehenden Abschnitts des Glockentellers dienen kann.

Das Merkmal der Aussparung im Lenkluftring ist folglich im Rahmen der Erfindung breit auszulegen.

Die Aussparung ist vorzugsweise in der Frontseite des Lenkluftrings ringförmig umlaufend angeordnet.

Die Aussparung ist vorzugsweise koaxial zum Lenkluftring und/oder zum Glockenteller angeordnet.

Die Austrittsöffnungen des Lenkluftrings zur Ausgabe eines Lenkluftstroms sind vorzugsweise radial außerhalb des nicht-metallischen Materials angeordnet, also insbesondere auf einem größeren Durchmesser angeordnet als das nicht-metallische Material.

Das nicht-metallische Material kann vorzugsweise auf oder in der Rückseite des Glockentellers angeordnet sein, z. B. auf einem rückseitigen, nach hinten abstehenden, zweckmäßig konvexen Abschnitt des Glockentellers.

Die Rückseite des Glockentellers entspricht der Seite, die im Betriebszustand und/oder im montierten Zustand dem Lenkluftring zugewandt ist.

Der rückseitige, nach hinten abstehende Abschnitt des Glockentellers kann z. B. ringförmig umlaufend angeordnet sein und/oder zur Aufnahme in der frontseitigen Aussparung des Lenkluftrings dienen.

Es ist möglich, dass das nicht-metallische Material des Lenkluftrings zur Seite des Glockentellers hin konkav ausgeformt ist oder sich zur Seite des Glockentellers hin konisch aufweitend erstreckt.

Es ist möglich, dass das nicht-metallische Material des Glockentellers zur Seite des Lenkluftrings hin konvex ausgeformt ist oder sich zur Seite des Lenkluftrings hin konisch verjüngend erstreckt.

Zu erwähnen ist, dass das Merkmal "Luft" im Rahmen der Erfindung breit auszulegen ist und zweckmäßig auch andere gasförmige Medien umfassen kann.

Zu erwähnen ist außerdem, dass der Lenkluftring ein separates Bauteil sein kann, um an einem Rotationszerstäuber befestigt werden zu können. Es besteht jedoch alternativ auch die Möglichkeit, dass der Lenkluftring ein integraler Bestandteil des Rotationszerstäubers und/oder des Rotationszerstäubergehäuses ist.

Zu erwähnen ist ferner, dass der Glockenteller im Betriebszustand zweckmäßig vor dem Lenkluftring angeordnet ist und alternativ oder ergänzend der Lenkluftring im Betriebszustand zweckmäßig hinter dem Glockenteller angeordnet ist.

Zu erwähnen ist des Weiteren, dass der Lenkluftring und der Glockenteller sich im montierten Zustand und/oder im Betriebszustand vorzugsweise axial überlappen, was durch die zuvor erwähnte frontseitige Aussparung im Lenkluftring und den zuvor erwähnten rückseitigen, nach hinten abstehenden Abschnitt des Glockentellers erzielbar ist. Im Betriebszustand und/oder im montierten Zustand ist der Glockenteller folglich abschnittsweise in dem Lenkluftring eingehaust.

Zu erwähnen ist darüber hinaus, dass sowohl der Glockenteller als auch der Lenkluftring mit einem nicht-metallischen Material versehen sein können, so dass es zu einem nicht-Metall-auf-nicht-Metall-Kontakt kommt, wenn sich der Lenkluftring im Betrieb ungewollt löst oder lockert.

Zu erwähnen ist noch, dass das nicht-metallische Material auf dem im Wesentlichen gesamten hinteren Außenmantel des Glockentellers aufgebracht sein kann, um zweckmäßig die Reinigbarkeit der Hinterkante oder allgemein des hinteren Außenmantels des Glockentellers zu verbessern. Das nicht-metallische Material kann z. B. auf im Wesentlichen allen Außenflächen des Glockentellers aufgebracht sein, mit Ausnahme der vorderen Lacküberströmfläche des Glockentellers.

Zu erwähnen ist außerdem, dass das nicht-metallische Material vorzugsweise kleberfrei an dem metallischen Grundkörper angebracht sein kann.

Das nicht-metallische Material ist zweckmäßig lack- und/oder lösemittelbeständig und alternativ oder ergänzend labs-frei.

Der Grundkörper des Glockentellers und/oder der Grundkörper des Lenkluftrings ist aus Stabilitäts- oder Festigkeitsgründen vorzugsweise aus einem Metall hergestellt, z. B. aus Titan oder Edelstahl.

Zu erwähnen ist ferner, dass wie üblich der Glockenteller zweckmäßig im Betrieb rotiert und/oder der Lenkluftring im Betrieb nicht rotiert.

Der Kontakt im Betrieb zwischen dem Glockenteller und dem Lenkluftring ist insbesondere ein Rotationskontakt, weil der Glockenteller im Betrieb rotiert.

Das Beschichtungsanlagenbauteil ist vorzugsweise ein Lackieranlagenbauteil für eine Lackieranlage zum Lackieren von Kraftfahrzeugkarosserien und/oder deren Anbauteilen.

Die Erfindung findet insbesondere Anwendung bei relativ kompakten, axial kurzen Glockenteller-Lenkluftring-Anordnungen, bei denen sich der Glockenteller und der Lenkluftring im Betriebszustand axial überlappen. Eine Anwendung bei sogenannten freistehenden Glockentellern ist allerdings ebenfalls möglich.

Zu erwähnen ist des Weiteren, dass im Rahmen der Erfindung nicht nur ein selbständiger Schutz für den Glockenteller und ein selbständiger Schutz für den Lenkluftring beansprucht werden, sondern ebenfalls ein Schutz für eine Glockenteller-Lenkluftring-Kombination.

Die Erfindung ist nicht auf den Glockenteller oder den Lenkluftring oder allgemein das Beschichtungsanlagenbauteil beschränkt, sondern umfasst auch einen vorzugsweise elektrostatischen Rotationszerstäuber zur Lackierung von Kraftfahrzeugkarosserien und/oder deren Anbauteilen. Der Rotationszerstäuber umfasst einen Glockenteller und/oder einen Lenkluftring wie hierin offenbart.

Darüber hinaus umfasst die Erfindung ein Verfahren zum Versehen eines Beschichtungsanlagenbauteils für einen Rotationszerstäuber mit einem nicht-metallischen Material.

Das Beschichtungsanlagenbauteil ist ein Glockenteller oder ein Lenkluftring und umfasst einen metallischen Grundkörper.

Das Verfahren zeichnet sich insbesondere dadurch aus, dass der metallische Grundkörper mit einem nicht-metallischen Material versehen wird.

Das Beschichtungsanlagenbauteil ist oder wird wie hierin offenbart ausgebildet.

Es ist möglich, dass das Beschichtungsanlagenbauteil mit einer elektrostatischen Schicht versehen wird und das nicht-metallische Material zweckmäßig auf die elektrostatische Schicht aufgetragen wird.

Das nicht-metallische Material und/oder die elektrostatische Schicht kann mittels Pulverbeschichtens, thermischen Spritzens oder Polymerbeschichtens auf den metallischen Grundkörper aufgebracht werden.

Zweckmäßig bevor das nicht-metallische Material und/oder die elektrostatische Schicht auf das Beschichtungsanlagenbauteil aufgetragen werden, kann das Beschichtungsanlagenbauteil einem Brennprozess und/oder einem Sandstrahlverfahren unterzogen werden. Der Brennprozess dient insbesondere dazu, das Beschichtungsanlagenbauteil fett- und/oder rückstandsfrei zu machen. Das Sandstrahlen z. B. mittels Aluminiumoxid dient insbesondere dazu, die Haftung auf dem Grundwerkstoff (Titan / Edelstahl) zu verbessern.

Zu erwähnen ist, dass das nicht-metallische Material, insbesondere die nicht-metallische Beschichtung, vorzugsweise kleberfrei auf den metallischen Grundkörper aufgetragen wird, insbesondere auf die elektrostatische Schicht.

Ferner ist zu erwähnen, dass es beim Kontakt zwischen dem Metall und dem nicht-metallischen Material, insbesondere dem Kunststoff, zu einem Abbremsvorgang des Glockentellers kommt. Das reduziert das Risiko der Funkenbildung und in der Folge z. B. eines Brandes und kann zum "Anschmelzen" und/oder Verkleben der Bauteile führen. Das Abbremsen und/oder das Verschmelzen und das Festsetzen sowieso kann von einer Drehzahlregelung-/Steuerung als Fehler diagnostiziert werden und kann zweckmäßig zu einem schnellen Stillstand und somit zu einer Gefährdungsminimierung durch die Regel-/Steuerungstechnik führen.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Schnittansicht eines vorderen Teils eines Rotationszerstäubers mit einem Lenkluftring gemäß einer Ausführungsform der Erfindung,
- Figur 2: zeigt eine Schnittansicht eines vorderen Teils eines Rotationszerstäubers mit einem Lenkluftring gemäß einer Ausführungsform der Erfindung,
- Figur 3: zeigt eine Schnittansicht eines vorderen Teils eines Rotationszerstäubers mit einem Glockenteller gemäß einer Ausführungsform der Erfindung,
- Figur 4: zeigt eine Schnittansicht eines vorderen Teils eines Rotationszerstäubers mit einem Lenkluftring gemäß einer Ausführungsform der Erfindung,
- Figur 5: zeigt eine Schnittansicht eines vorderen Teils eines Rotationszerstäubers mit einem Lenkluftring gemäß einer Ausführungsform der Erfindung, und
- Figur 6: zeigt ein Flussdiagramm eines Verfahrens gemäß einer Ausführungsform der Erfindung.

Die in den Figuren gezeigten Ausführungsformen stimmen teilweise überein, wobei ähnliche oder identische Teile mit den gleichen Bezugszeichen versehen sind und zu deren Erläuterung auch auf die Beschreibung der anderen Ausführungsformen verwiesen wird, um Wiederholungen zu vermeiden.

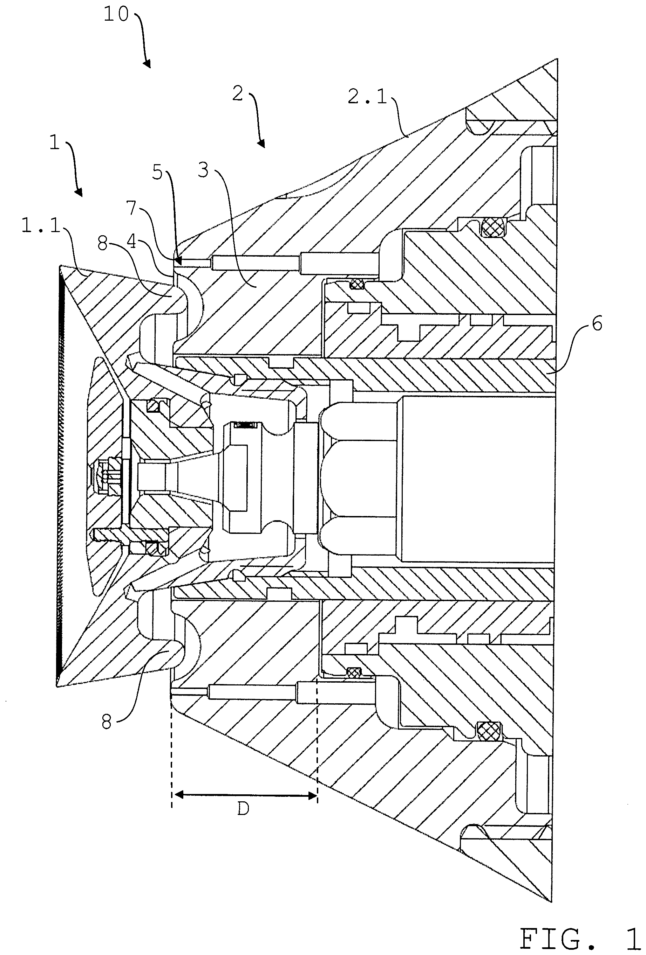

Figur 1 zeigt eine Schnittansicht eines elektrostatischen Rotationszerstäubers 10 zur Lackierung von Kraftfahrzeugkarosserien und/oder Anbauteilen hierfür. Der Rotationszerstäuber 10 umfasst einen im Betrieb rotierenden Glockenteller 1 zur Zerstäubung von Lack und zur Abgabe eines Lack-Sprühstrahls. Der Rotationszerstäuber 10 umfasst ferner einen im Betrieb nicht-rotierenden Lenkluftring 2 zur Abgabe eines Lenkluftstroms aus Lenkluftaustrittsöffnungen 7 zur Formung des von dem Glockenteller 1 abgegebenen Lack-Sprühstrahls. Der Glockenteller 1 ist vor dem Lenkluftring 2 angeordnet. Der Lenkluftring 2 entspricht einer Ausführungsform der Erfindung, während der Glockenteller 1 im Wesentlichen gemäß Stand der Technik ausgeführt sein kann.

Der Glockenteller 1 umfasst einen metallischen Grundkörper 1.1 und ist von einer Zerstäuberwelle 6 antreibbar, um im Betrieb zu rotieren. Der Lenkluftring 2 umfasst ebenfalls einen metallischen Grundkörper 2.1. Zwischen dem Glockenteller 1 und dem Lenkluftring 2 ist ein relativ kleiner Spalt oder Luftraum 4 vorhanden.

Wenn der Lenkluftring 2, z. B. wegen nicht sachgemäßer Montage und/oder wegen dem im Betrieb vorhandenen Druck für die Lenkluft, sich im Betrieb löst oder lockert, kann es zu einem ungewollten Kontakt mit dem im Betrieb rotierenden Glockenteller 1 kommen.

Um durch einen Metall-Metall-Rotationskontakt hervorgerufene Funken und/oder Funkenflug zu verhindern, ist der metallische Grundkörper 2.1 des Lenkluftrings 2 mit einem nicht-metallischen Material 3 versehen. Zwar besteht auch bei dem Lenkluftring 2 gemäß der Erfindung grundsätzlich die Gefahr des im Betrieb ungewollten Lösens oder Lockerns, allerdings kommt es wegen dem nicht-metallischen Material 3 zu keiner Metall-auf-Metall-Kontaktierung, sondern zu einer Metall-auf-NichtMetall-Kontaktierung und somit zu keinen Funken und/oder keinem Funkenflug, was z. B. in einer Lösemittelzone zum Auslösen einer Brandschutzanlage führen könnte.

Das nicht-metallische Material 3 ist also ausgebildet und angeordnet, um im Betrieb einen Metall-auf-Metall-Rotationskontakt zwischen dem Glockenteller 1 und dem Lenkluftring 2 und folglich eine Funkenentstehung zu verhindern, wenn sich der Lenkluftring 2 im Betrieb ungewollt löst oder lockert und auf den rotierenden Glockenteller 1 trifft. Dadurch, dass das nicht-metallische Material 3 im Betrieb auf den rotierenden, metallischen Grundkörper 1.1 des Glockentellers 1 trifft, wird es zwar zumindest geringfügig abgetragen und beschädigt, aber nicht bis zum metallischen Grundkörper 2.1 des Lenkluftrings 2 hin. Das nicht-metallische Material 3 kann hierzu eine Dicke (Stärke) D von zumindest ca. 1,5 mm aufweisen.

Das nicht-metallische Material 3 ist insbesondere an oder in der Frontseite des Lenkluftrings 2 angeordnet, also der Seite, die im Betriebszustand dem Glockenteller 1 zugewandt ist. Das nicht-metallische Material 3 ist ringförmig umlaufend angeordnet und in einer ebenfalls ringförmig umlaufenden Aussparung 5 des Lenkluftrings 2 untergebracht. Das nicht-metallische Material 3 ist als Einsatz und/oder Füllung in der Aussparung 5 aufgenommen und zur Seite des Glockentellers 1 hin konkav ausgeformt.

Die Aussparung 5 dient einerseits zur Aufnahme des nicht-metallischen Materials 3 und andererseits zur Aufnahme eines rückseitigen, nach hinten abstehenden Abschnitts 8 des Glockentellers 1. Der Abschnitt 8 ragt axial in die Aussparung 5 hinein, so dass es zu einer axialen Überlappung zwischen dem Glockenteller 1 und dem Lenkluftring 2 kommt. Dadurch kann eine kompakte Glockenteller-Lenkluftring-Anordnung erzielt werden.

Die Aussparung 5 ist insbesondere so ausgeführt, dass sie zwei Aufnahmebereiche umfasst, nämlich einen vorderen, frontseitigen Aufnahmebereich zur Aufnahme des Abschnitts 8 und einen hinteren, rückseitigen Aufnahmebereich zur Aufnahme des nicht-metallischen Materials 3.

Die Aussparung 5 kann also im Rahmen der Erfindung quasi verschiedene, insbesondere miteinander verbundene Aufnahmebereiche umfassen.

Die Lenkluftaustrittsöffnungen 7 des Lenkluftrings 2 zur Ausgabe des Lenkluftstroms sind radial außerhalb des nicht-metallischen Materials 3 angeordnet.

Das nicht-metallische Material 3 ist vorzugsweise ein geeigneter Kunststoff, z. B. ein thermoplastischer Kunststoff, ein organisches Polymer, Polyoxymethylen (POM), Polyetheretherketon (PEEK), Polyamid (PA), Polycarbonat (PC), Polybutylenterephthalat (PBT), Polymethylpenten (PMP), Polytetrafluorethylen (PTFE) und/oder Ethylen-Chlortrifluorethylen-Copolymer (Halar®/ECTFE).

Das nicht-metallische Material 3 ist insbesondere nicht elektrisch leitfähig.

Zu erwähnen ist, dass das nicht-metallische Material 3 alternativ oder ergänzend zu der Anordnung am Lenkluftring 2 an dem Glockenteller 1 angeordnet werden kann, so dass es im Rahmen der Erfindung nicht nur zu einem Metall-auf-nichtMetall-Kontakt, sondern auch zu einem nicht-Metall-auf-nichtMetall-Kontakt kommen kann, wenn sich der Lenkluftring 2 im Betrieb ungewollt löst oder lockert und den rotierenden Glockenteller 1 kontaktiert.

Der Grundkörper 1.1 des Glockentellers und der Grundkörper 2.1 des Lenkluftrings 2 sind aber aus Stabilitäts- oder Festigkeitsgründen aus einem Metall hergestellt, z. B. aus Titan oder Edelstahl.

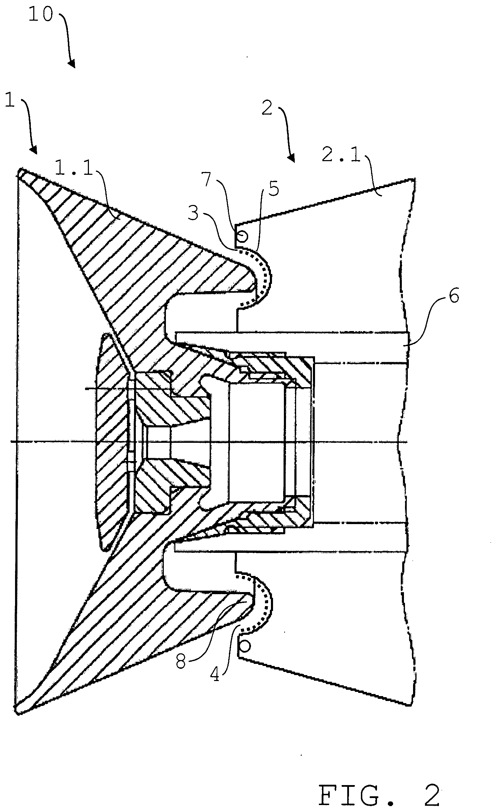

Figur 2 zeigt einen vorderen Teil eines Rotationszerstäubers 10 mit einem Glockenteller 1 und einem schematisch dargestellten Lenkluftring 2 gemäß einer Ausführungsform der Erfindung.

Eine Besonderheit des Lenkluftrings 2 der Figur 2 ist, dass das nicht-metallische Material 3 kein relativ dicker nicht-metallischer Einsatz wie in Figur 1 ist, sondern als relativ dünne nicht-metallische Beschichtung ausgeführt ist.

Das nicht-metallische Material 3 ist in einer ringförmigen Aussparung 5 aufgenommen, die zusätzlich zur Aufnahme des rückseitigen, nach hinten abstehenden Abschnitts 8 des Glockentellers 1 dient.

Die Aussparung 5 in Figur 2 umfasst somit quasi nur einen Aufnahmebereich, der sowohl das nicht-metallische Material 3 als auch den rückseitigen, nach hinten abstehenden Abschnitt 8 des Glockentellers 1 gemeinsam aufnimmt.

Das nicht-metallische Material 3 ist zur Seite des Glockentellers 1 hin konkav ausgeformt, weil die Aussparung 5 konkav ausgeformt ist.

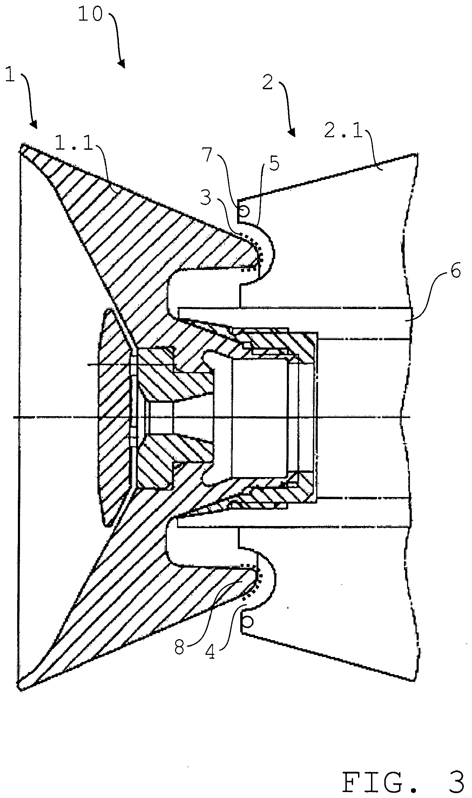

Figur 3 zeigt einen vorderen Teil eines Rotationszerstäubers 10 mit einem Glockenteller 1 gemäß einer Ausführungsform der Erfindung.

Eine Besonderheit der in Figur 3 gezeigten Ausführungsform ist, dass das nicht-metallische Material 3 nicht an dem Lenkluftring 2 ausgebildet ist, sondern an dem Glockenteller 1.

Das nicht-metallische Material 3 ist als nicht-metallische Beschichtung an dem rückseitigen, nach hinten abstehenden Abschnitt 8 des Glockentellers 1 ausgebildet. Das nicht-metallische Material 3 und der Abschnitt 8 sind ringförmig umlaufend angeordnet. Der Abschnitt 8 dient wie schon zuvor erwähnt zur Aufnahme in der frontseitigen Aussparung 5 des Lenkluftrings 2.

Das nicht-metallische Material 3 ist zur Seite des Lenkluftrings 2 hin konvex ausgeformt, weil der Abschnitt 8 konvex ausgeformt ist.

In einer nicht gezeigten Ausführungsform könnte das nicht-metallische Material auch in einer Aussparung im rückseitigen, nach hinten abstehenden Abschnitt des Glockentellers angeordnet werden.

In einer ebenfalls nicht gezeigten Ausführungsform kann das nicht-metallische Material anstatt als Beschichtung als quasi kappen- oder kronenförmiger Aufsatz auf den rückseitigen, nach hinten abstehenden Abschnitt des Glockentellers aufgesetzt sein.

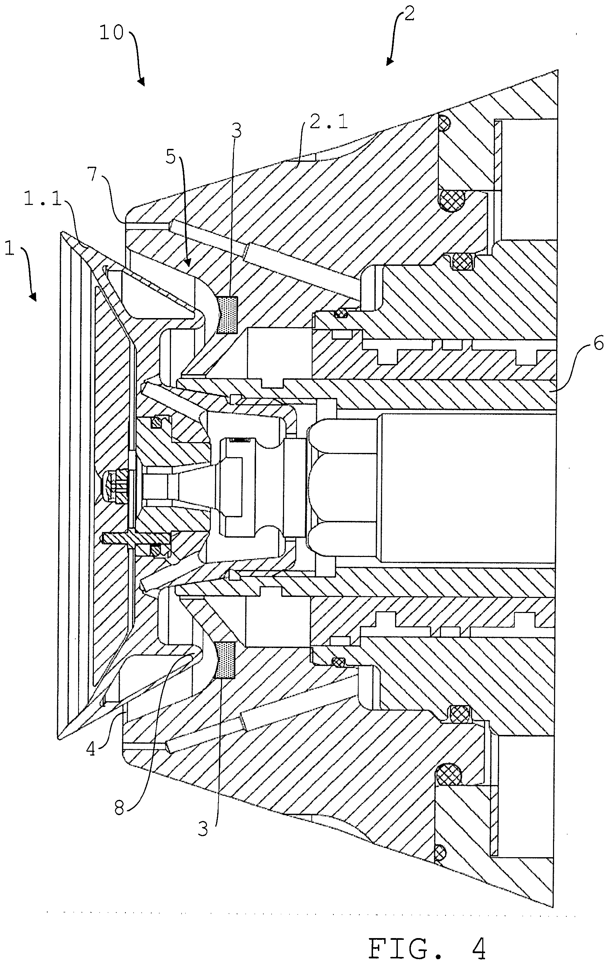

Figur 4 zeigt einen vorderen Teil eines Rotationszerstäubers 10 mit einem Lenkluftring 2 gemäß einer Ausführungsform der Erfindung.

Die in Figur 4 gezeigte Ausführungsform ist ähnlich zu der in Figur 1 gezeigten Ausführungsform, allerdings ist die Aussparung 5 zur Aufnahme des nicht-metallischen Materials 3 und des rückseitigen, nach hinten abstehende Abschnitts 8 des Glockentellers 1 größer. Das führt zu einer größeren axialen Überlappung zwischen dem Glockenteller 1 und dem Lenkluftring 2 und/oder zu einer kompakteren Glockenteller-Lenkluftring-Anordnung. Das nicht-metallische Material 3 ist nur schematisch dargestellt. Erneut dient ein hinterer Teil der Aussparung 5 zweckmäßig zur Aufnahme des nicht-metallischen Materials 3.

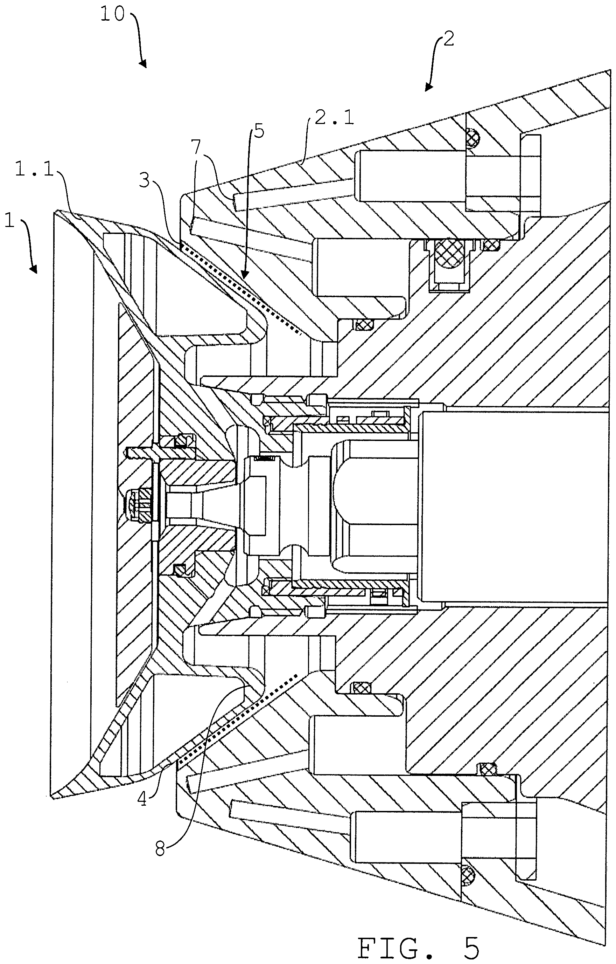

Figur 5 zeigt einen vorderen Teil eines Rotationszerstäubers 10 mit einem Lenkluftring 2 gemäß einer Ausführungsform der Erfindung.

In der in Figur 5 gezeigten Ausführungsform ist das nicht-metallische Material 3 als Beschichtung in der Aussparung 5 des metallischen Grundkörpers 2.1 des Lenkluftrings 2 angeordnet.

Das nicht-metallische Material 3 erstreckt sich zur Seite des Glockentellers 1 hin konisch aufweitend, weil sich die Aussparung 5 zur Seite des Glockentellers 1 hin konisch aufweitet.

Das in Figur 5 gezeigte nicht-metallische Material 3 kann alternativ oder ergänzend ebenso an der gegenüberliegenden Fläche des Glockentellers 1 ausgebildet werden. Das nicht-metallische Material 3 erstreckt sich dann zur Seite des Lenkluftrings 2 hin konisch verjüngend, weil sich der metallische Grundkörper 1.1 zur Seite des Lenkluftrings 2 hin konisch verjüngt.

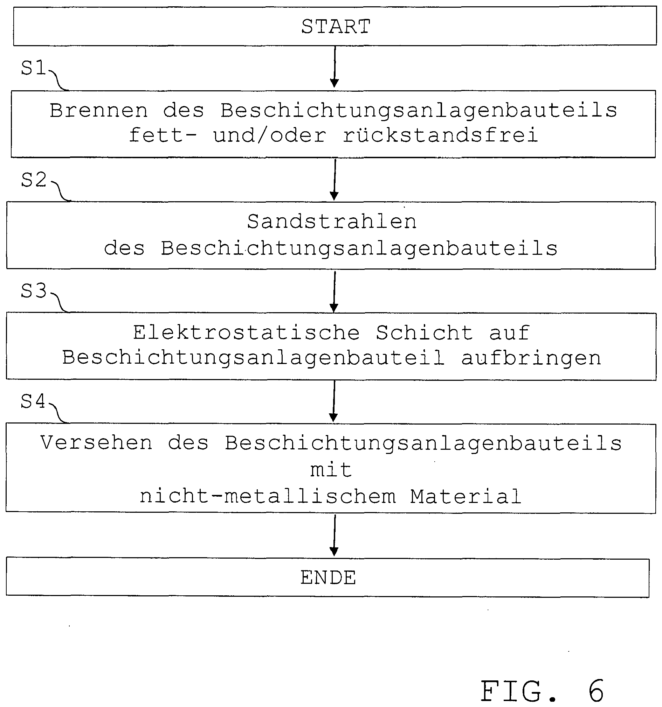

Figur 6 zeigt ein Flussdiagramm eines Verfahrens zum Versehen eines Beschichtungsanlagenbauteils 1 mit einem nicht-metallischen Material 3 gemäß einer Ausführungsform der Erfindung.

Das Beschichtungsanlagenbauteil 1 kann insbesondere ein Glockenteller 1 oder eines Lenkluftring 2 wie zuvor beschrieben sein.

In einem Schritt S1 wird das Beschichtungsanlagenbauteil 1 einem Brennprozess unterworfen, um es fett und/oder rückstandsfrei zu machen.

In einem Schritt S2 wird das Beschichtungsanlagenbauteil 1 sandgestrahlt, um die Haftung für das Trägermaterial (z. B. Titan / Edelstahl) zu verbessern.

In einem optionalen Schritt S3 wird eine vorzugsweise elektrostatische Schicht auf das Beschichtungsanlagenbauteil 1 aufgebracht.

In einem Schritt S4 wird der metallische Grundkörper 1.1; 2.1 des Beschichtungsanlagenbauteils 1 mit einem nicht-metallischen Material 3 versehen. Das nicht-metallische Material 3 kann z. B. durch thermisches Spritzen, Pulverbeschichten oder Polymerbeschichten aufgetragen werden oder als Aufsatz oder Einsatz auf oder in dem metallischen Grundkörper 1.1; 2.1 angebracht werden.

Abschließend ist nochmals zu erwähnen, dass im Rahmen der Erfindung separat Schutz für den Glockenteller 1 und separat Schutz für den Lenkluftring 2 beansprucht wird. Darüber hinaus wird Schutz für eine Glockenteller-Lenkluftring-Kombination für einen Rotationszerstäuber 10 beansprucht.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Glockenteller
- 1.1: Metallischer Grundkörper des Glockentellers
- 2: Lenkluftring
- 2.1: Metallischer Grundkörper des Lenkluftrings
- 3: Nicht-metallisches Material
- D: Dicke/Stärke des nicht metallischen Materials
- 4: Spalt/Luftraum zwischen Glockenteller und Lenkluftring
- 5: Aussparung/Ringmulde im Lenkluftring
- 6: Zerstäuberwelle
- 7: Lenkluftaustrittsöffnungen
- 8: Rückseitiger, nach hinten abstehender Abschnitt des Glockentellers
- 10: Rotationszerstäuber

## Patentansprüche

1. Rotationszerstäuber einer Beschichtungsanlage mit einem Glockenteller (1) und einem Lenkluftring (2) mit jeweils einem metallischen Grundkörper (1.1; 2.1), **dadurch gekennzeichnet, dass** der metallische Grundkörper (1.1; 2.1) des Glockentellers (1) und/oder des Lenkluftrings (2) an seiner Außenfläche mit einem nicht-metallischen Material (3) versehen ist, das an dem Grundkörper (1.1; 2.1) selbst aufgebracht ist, derart, dass im Betrieb ein ungewollter Metall-auf-Metall-Kontakt zwischen dem rotierenden Glockenteller (1) und dem Lenkluftring (2) vermieden wird.

2. Rotationszerstäuber nach Anspruch 1, **dadurch gekennzeichnet, dass** der metallische Grundkörper (1.1; 2.1) mit dem nicht-metallischen Material (3) versehen ist, um im Betrieb einen Metall-auf-Metall-Kontakt zwischen Glockenteller (1) und Lenkluftring (2) und/oder eine Funkenentstehung zu vermeiden, wenn sich der Lenkluftring (2) im Betrieb ungewollt löst oder lockert und den rotierenden Glockenteller (1) kontaktiert.

3. Rotationszerstäuber nach Anspruch 1 oder 2, **dadurch gekennzeichnet, dass** das nicht-metallische Material (3) zwar zumindest geringfügig abgetragen wird, wenn sich der Lenkluftring (2) im Betrieb ungewollt löst oder lockert und den rotierenden Glockenteller (1) kontaktiert, aber nicht bis zum metallischen Grundkörper (1.1; 2.1) hin.

4. Rotationszerstäuber nach einem der vorhergehenden Ansprüche, **dadurch gekennzeichnet, dass** das nicht-metallische Material (3) ein Kunststoff ist.

5. Rotationszerstäuber nach einem der vorhergehenden Ansprüche, **dadurch gekennzeichnet, dass** das nicht-metallische Material (3) ringförmig umlaufend angeordnet ist.

6. Rotationszerstäuber nach einem der vorhergehenden Ansprüche, **dadurch gekennzeichnet, dass** das nicht-metallische Material (3) eine nicht-metallische Beschichtung (3), ein nicht-metallischer Einsatz (3) oder ein nicht-metallischer Aufsatz (3) ist.

7. Rotationszerstäuber nach einem der vorhergehenden Ansprüche, **dadurch gekennzeichnet, dass** der Grundkörper (1.1; 2.1) aus Titan oder Edelstahl (V2A, V4A) hergestellt ist.

8. Rotationszerstäuber nach einem der vorhergehenden Ansprüche, **dadurch gekennzeichnet, dass** das nicht-metallische Material (3) ausgewählt wird aus der Gruppe umfassend:
- thermoplastischer Kunststoff
- organisches Polymer
- Polyoxymethylen (POM)
- Polyetheretherketon (PEEK)
- Polyamid (PA)
- Polycarbonat (PC)
- Polybutylenterephthalat (PBT)
- Polymethylpenten (PMP)
- Polytetrafluorethylen (PTFE)
- Ethylen-Chlortrifluorethylen-Copolymer (ECTFE)

9. Rotationszerstäuber nach einem der vorhergehenden Ansprüche, **dadurch gekennzeichnet, dass** unter dem nicht-metallischen Material (3) eine Schicht ausgebildet ist, wobei die Schicht elektrostatisch ist und/oder zur Verbesserung der Haftung des nicht-metallischen Materials (3) auf dem Beschichtungsanlagenbauteil (1; 2) dient.

10. Rotationszerstäuber nach einem der vorhergehenden Ansprüche, **dadurch gekennzeichnet, dass** das nicht-metallische Material (3) elektrisch leitfähig ist.

11. Rotationszerstäuber nach einem der vorhergehenden Ansprüche, **dadurch gekennzeichnet, dass** das nicht-metallische Material (3) eine Breite (B) von kleiner als 20mm; 15mm; 10mm; 7,5mm; 5mm; 4mm; oder kleiner 3mm aufweist.

12. Rotationszerstäuber nach einem der vorhergehenden Ansprüche, **dadurch gekennzeichnet, dass** die Dicke (D) des nicht-metallischen Materials (3) größer ist als 0,1mm; 0,2mm; 0,4mm; 0,6mm; 0,8mm; 1,0mm; 1,2mm; oder 1,4mm.

13. Rotationszerstäuber nach einem der vorhergehenden Ansprüche, **gekennzeichnet durch** zumindest eines der folgenden Merkmale:
- Der Glockenteller (1) ist zur Anordnung vor dem Lenkluftring (2) ausgeführt,
- der Lenkluftring (2) ist zur Anordnung hinter dem Glockenteller (1) ausgeführt,
- der Glockenteller (1) ist zur axialen Überlappung mit dem Lenkluftring (2) ausgeführt,
- der Lenkluftring (2) ist zur axialen Überlappung mit dem Glockenteller (1) ausgeführt.

14. Rotationszerstäuber nach einem der vorhergehenden Ansprüche, **dadurch gekennzeichnet, dass** das nicht-metallische Material (3) an oder in der Frontseite des Lenkluftrings (2) angeordnet ist.

15. Rotationszerstäuber nach einem der vorhergehenden Ansprüche, **dadurch gekennzeichnet, dass** der Lenkluftring (2) mit einer Aussparung (5) versehen ist und die Aussparung (5)
- zur Aufnahme eines rückseitigen, nach hinten abstehenden Abschnitts (8) des Glockentellers (1) dient und/oder
- zur Aufnahme des nicht-metallischen Materials (3) dient.

16. Rotationszerstäuber nach Anspruch 15, **dadurch gekennzeichnet, dass** die Aussparung (5) in der Frontseite des Lenkluftrings (2) ringförmig umlaufend angeordnet ist.

17. Rotationszerstäuber nach einem der vorhergehenden Ansprüche, **dadurch gekennzeichnet, dass** die Lenkluftaustrittsöffnungen (7) des Lenkluftrings (2) radial außerhalb des nicht-metallischen Materials (3) angeordnet sind.

18. Rotationszerstäuber nach einem der vorhergehenden Ansprüche, **dadurch gekennzeichnet, dass** das nicht-metallische Material (3) auf der Rückseite des Glockentellers (1) angeordnet ist.

19. Rotationszerstäuber nach einem der vorhergehenden Ansprüche, **dadurch gekennzeichnet, dass** der Glockenteller (1) einen rückseitigen, nach hinten abstehenden Abschnitt (8) aufweist und das nicht-metallische Material (3) auf oder in dem rückseitigen, nach hinten abstehenden Abschnitt (8) angeordnet ist.

20. Rotationszerstäuber nach einem der vorhergehenden Ansprüche, **dadurch gekennzeichnet, dass** der rückseitige, nach hinten abstehende Abschnitt (8) des Glockentellers (1) ringförmig umlaufend angeordnet ist und/oder zur Aufnahme in einer frontseitigen Aussparung (5) des Lenkluftrings (2) dient.

21. Rotationszerstäuber nach einem der vorhergehenden Ansprüche, **dadurch gekennzeichnet, dass** das nicht-metallische Material (3) des Lenkluftrings (2)
- zur Seite des Glockentellers (1) hin konkav erstreckend ausgeformt ist oder
- sich zur Seite des Glockentellers (1) hin konisch aufweitend erstreckt.

22. Rotationszerstäuber nach einem der vorhergehenden Ansprüche, **dadurch gekennzeichnet, dass** das nicht-metallische Material (3) des Glockentellers (1)
- zur Seite des Lenkluftrings (2) hin konvex erstreckend ausgeformt ist oder
- sich zur Seite des Lenkluftrings (2) hin konisch verjüngend erstreckt.

23. Rotationszerstäuber (10) zur Lackierung von Kraftfahrzeugkarosserien und/oder deren Anbauteilen nach einem der vorhergehenden Ansprüche.

24. Glockenteller (1) des Rotationszerstäubers (10) nach einem der vorhergehenden Ansprüche, an dessen Grundkörper (1.1) das nicht-metallische Material (3) aufgebracht ist.

25. Lenkluftring (2) des Rotationszerstäubers (10) nach einem der Ansprüche 1 bis 23, an dessen Grundkörper (2.1) das nicht-metallische Material (3) aufgebracht ist.

26. Verfahren zum Versehen des Glockentellers (1) und/oder des Lenkluftrings (2) eines Rotationszerstäubers (10) gemäß einem der Ansprüche 1 bis 23 mit einem nicht-metallischen Material (3), wobei der metallische Grundkörper (1.1; 2.1) des Glockentellers (1) und/oder des Lenkluftrings (2) an seiner Außenseite mit dem nicht-metallischen Material (3) versehen wird, das an dem Grundkörper (1.1; 2.1) selbst aufgebracht wird, derart, dass im Betrieb ein ungewollter Metall-auf-Metall-Kontakt zwischen dem rotierenden Glockenteller (1) und dem Lenkluftring (2) vermieden wird.

## Claims

1. Rotary atomiser of a coating plant with a bell cup (1) and a shaping air ring (2) each having a metallic base body (1.1; 2.1), **characterised in that** the metallic base body (1.1; 2.1) of the bell cup (1) and/or of the shaping air ring (2) is provided on its outer surface with a non-metallic material (3), which is applied on the base body (1;1; 2.1) itself so that, during operation, unintentional metal-on-metal contact between the rotating bell cup (1) and the shaping air ring (2) is avoided.

2. Rotary atomiser according to claim 1, **characterised in that** the metallic base body (1.1; 2.1) is provided with the non-metallic material (3) in order to avoid, during operation, metal-on-metal contact between the bell cup (1) and the shaping air ring (2) and/or sparking if the shaping air ring (2) unintentionally becomes detached or loosens during operation and comes into contact with the rotating bell cup (1).

3. Rotary atomiser according to claim 1 or 2, **characterised in that**, although the non-metallic material (3) is removed at least slightly if the shaping air ring (2) unintentionally becomes detached or loosens during operation and comes into contact with the rotating bell cup (1), it is not removed down to the metallic base body (1.1; 2.1).

4. Rotary atomiser according to any one of the preceding claims, **characterised in that** the non-metallic material (3) is a plastics material.

5. Rotary atomiser according to any one of the preceding claims, **characterised in that** the non-metallic material (3) is arranged in an annular circumferential manner.

6. Rotary atomiser according to any one of the preceding claims, **characterised in that** the non-metallic material (3) is a non-metallic coating (3), a non-metallic insert (3) or a non-metallic put-on part (3).

7. Rotary atomiser according to any one of the preceding claims, **characterised in that** the base body (1.1; 2.1) is made of titanium or stainless steel (V2A, V4A).

8. Rotary atomiser according to any one of the preceding claims, **characterised in that** the non-metallic material (3) is selected from the group comprising:
- thermoplastic plastics material
- organic polymer
- polyoxymethylene (POM)
- polyether ether ketone (PEEK)
- polyamide (PA)
- polycarbonate (PC)
- polybutylene terephthalate (PBT)
- polymethylpentene (PMP)
- polytetrafluoroethylene (PTFE)
- ethylene-chlorotrifluoroethylene copolymer (ECTFE).

9. Rotary atomiser according to any one of the preceding claims, **characterised in that** a layer is formed beneath the non-metallic material (3), wherein the layer is electrostatic and/or serves to improve the adhesion of the non-metallic material (3) to the coating plant component (1; 2).

10. Rotary atomiser according to any one of the preceding claims, **characterised in that** the non-metallic material (3) is electrically conductive.

11. Rotary atomiser according to any one of the preceding claims, **characterised in that** the non-metallic material (3) has a width (B) of less than 20 mm; 15 mm; 10 mm; 7.5 mm; 5 mm; 4 mm; or less than 3 mm.

12. Rotary atomiser according to any one of the preceding claims, **characterised in that** the thickness (D) of the non-metallic material (3) is greater than 0.1 mm; 0.2 mm; 0.4 mm; 0.6 mm; 0.8 mm; 1.0 mm; 1.2 mm; or 1.4 mm.

13. Rotary atomiser according to any one of the preceding claims, **characterised by** at least one of the following features:
- the bell cup (1) is designed to be arranged in front of the shaping air ring (2),
- the shaping air ring (2) is designed to be arranged behind the bell cup (1),
- the bell cup (1) is designed to overlap the shaping air ring (2) axially,
- the shaping air ring (2) is designed to overlap the bell cup (1) axially.

14. Rotary atomiser according to any one of the preceding claims, **characterised in that** the non-metallic material (3) is arranged on or in the front side of the shaping air ring (2) .

15. Rotary atomiser according to any one of the preceding claims, **characterised in that** the shaping air ring (2) is provided with a recess (5) and the recess (5)
- serves to receive a rear, backwardly protruding portion (8) of the bell cup (1), and/or
- serves to receive the non-metallic material (3).

16. Rotary atomiser according to claim 15, **characterised in that** the recess (5) is arranged in an annular circumferential manner in the front side of the shaping air ring (2).

17. Rotary atomiser according to any one of the preceding claims, **characterised in that** the shaping air outlet openings (7) of the shaping air ring (2) are arranged radially outside the non-metallic material (3).

18. Rotary atomiser according to any one of the preceding claims, **characterised in that** the non-metallic material (3) is arranged on the rear side of the bell cup (1).

19. Rotary atomiser according to any one of the preceding claims, **characterised in that** the bell cup (1) has a rear, backwardly protruding portion (8) and the non-metallic material (3) is arranged on or in the rear, backwardly protruding portion (8).

20. Rotary atomiser according to any one of the preceding claims, **characterised in that** the rear, backwardly protruding portion (8) of the bell cup (1) is arranged in an annular circumferential manner and/or serves to be received in a recess (5) on the front side of the shaping air ring (2).

21. Rotary atomiser according to any one of the preceding claims, **characterised in that** the non-metallic material (3) of the shaping air ring (2)
- is formed to extend in a concave manner on the side facing the bell cup (1) or
- extends in a conically widening manner on the side facing the bell cup (1).

22. Rotary atomiser according to any one of the preceding claims, **characterised in that** the non-metallic material (3) of the bell cup (1)
- is formed to extend in a convex manner on the side facing the shaping air ring (2) or
- extends in a conically tapering manner on the side facing the shaping air ring (2).

23. Rotary atomiser (10) for painting motor vehicle bodies and/or add-on parts thereof according to any one of the preceding claims.

24. Bell cup (1) of the rotary atomiser (10) according to any one of the preceding claims on the base body (1.1) of which the non-metallic material (3) is applied.

25. Shaping air ring (2) of the rotary atomiser (10) according to any one of claims 1 to 23 on the base body (2.1) of which the non-metallic material (3) is applied.

26. Method for providing the bell cup (1) and/or the shaping air ring (2) of a rotary atomiser (10) according to any one of claims 1 to 23 with a non-metallic material (3), wherein the metallic base body (1.2; 2.1) of the bell cup (1) and/or of the shaping air ring (2) is provided on its outer surface with the non-metallic material (3), which is applied on the base body (1;1; 2.1) itself so that, during operation, unintentional metal-on-metal contact between the rotating bell cup (1) and the shaping air ring (2) is avoided.

## Revendications

1. Pulvérisateur rotatif d'une installation de revêtement avec un plateau à cloche (1) et un anneau d'air de guidage (2), chacun avec un corps de base métallique (1.1 ; 2.1), **caractérisé en ce que** le corps de base métallique (1.1 ; 2.1) du plateau à cloche (1) et/ou de l'anneau d'air de guidage (2) est muni, au niveau de son côté externe, d'un matériau non métallique (3), qui est appliqué sur le corps de base (1.1 ; 2.1) lui-même, de façon à éviter, pendant le fonctionnement, un contact métal sur métal indésirable entre le plateau à cloche (1) en rotation et l'anneau d'air de guidage (2).

2. Pulvérisateur rotatif selon la revendication 1, **caractérisé en ce que** le corps de base métallique (1.1 ; 2.1) est muni du matériau non métallique (3) afin d'éviter, lors du fonctionnement, un contact métal sur métal indésirable entre le plateau à cloche (1) et l'anneau d'air de guidage (2) et/ou une apparition d'étincelles lorsque l'anneau d'air de guidage (2) se détache ou se desserre par inadvertance lors du fonctionnement et entre en contact avec le plateau à cloche (1) en rotation.

3. Pulvérisateur rotatif selon la revendication 1 ou 2, **caractérisé en ce que** le matériau non métallique (3) est certes au moins faiblement enlevé lorsque l'anneau d'air de guidage (2) se détache ou se desserre par inadvertance lors du fonctionnement et entre en contact avec le plateau à cloche (1) en rotation, mais pas jusqu'au corps de base métallique (1.1 ; 2.1).

4. Pulvérisateur rotatif selon l'une des revendications précédentes, **caractérisé en ce que** le matériau non métallique (3) est une matière plastique.

5. Pulvérisateur rotatif selon l'une des revendications précédentes, **caractérisé en ce que** le matériau non métallique (3) est disposé sur la circonférence sous une forme annulaire.

6. Pulvérisateur rotatif selon l'une des revendications précédentes, **caractérisé en ce que** le matériau non métallique (3) est un revêtement non métallique (3), un insert non métallique (3) ou un embout non métallique (3).

7. Pulvérisateur rotatif selon l'une des revendications précédentes, **caractérisé en ce que** le corps de base (1.1 ; 2.1) est constitué de titane ou d'acier inoxydable (V2A, V4A).

8. Pulvérisateur rotatif selon l'une des revendications précédentes, **caractérisé en ce que** le matériau non métallique (3) est sélectionné dans le groupe comprenant :
- matière plastique thermoplastique
- polymère organique
- polyoxyméthylène (POM)
- polyétheréthercétone (PEEK)
- polyamide (PA)
- polycarbonate (PC)
- polybutylènetéréphtalate (PBT)
- polyméthylpentène (PMP)
- polytétrafluoroéthylène (PTFE)
- copolymère éthylène-chlortrifluoroéthylène (ECTFE)

9. Pulvérisateur rotatif selon l'une des revendications précédentes, **caractérisé en ce que**, sous le matériau non métallique (3), est réalisée une couche, cette couche étant électrostatique et/ou permettant d'améliorer l'adhérence du matériau non métallique (3) sur le composant d'installation de revêtement (1 ; 2).

10. Pulvérisateur rotatif selon l'une des revendications précédentes, **caractérisé en ce que** le corps non métallique (3) est électro-conducteur.

11. Pulvérisateur rotatif selon l'une des revendications précédentes, **caractérisé en ce que** le matériau non métallique (3) présente une largeur (B) inférieure à 20 mm ; 15 mm ; 10 mm ; 7,5 mm ; 5 mm ; 4 mm ou inférieure à 3 mm.

12. Pulvérisateur rotatif selon l'une des revendications précédentes, **caractérisé en ce que** l'épaisseur (D) du matériau non métallique (3) est supérieure à 0,1 mm ; 0,2 mm ; 0,4 mm ; 0,6 mm ; 0,8 mm ; 1,0 mm ; 1,2 mm ; ou 1,4 mm.

13. Pulvérisateur rotatif selon l'une des revendications précédentes, **caractérisé par** au moins une des caractéristiques suivantes :
- le plateau à cloche (1) est conçu pour être disposé devant l'anneau d'air de guidage (2),
- l'anneau d'air de guidage (2) est conçu pour être disposé derrière le plateau à cloche (1),
- le plateau à cloche (1) est conçu pour être superposé axialement avec l'anneau d'air de guidage (2),
- l'anneau d'air de guidage (2) est conçu pour être superposé axialement avec le plateau à cloche (1).

14. Pulvérisateur rotatif selon l'une des revendications précédentes, **caractérisé en ce que** le matériau non métallique (3) est disposé sur ou dans le côté frontal de l'anneau d'air de guidage (2).

15. Pulvérisateur rotatif selon l'une des revendications précédentes, **caractérisé en ce que** l'anneau d'air de guidage (2) est muni d'un évidement (5) et l'évidement (5)
- permet le logement d'une portion arrière (8) en saillie vers l'arrière du plateau à cloche (1) et/ou
- permet le logement du matériau non métallique (3).

16. Pulvérisateur rotatif selon la revendication 15, **caractérisé en ce que** l'évidement (5) est disposé dans le côté frontal de l'anneau d'air de guidage (2) sur la circonférence sous une forme annulaire.

17. Pulvérisateur rotatif selon l'une des revendications précédentes, **caractérisé en ce que** les ouvertures de sortie de l'air de guidage (7) de l'anneau d'air de guidage (2) sont disposées radialement à l'extérieur du matériau non métallique (3).

18. Pulvérisateur rotatif selon l'une des revendications précédentes, **caractérisé en ce que** le matériau non métallique (3) est disposé à l'arrière du plateau à cloche (1).

19. Pulvérisateur rotatif selon l'une des revendications précédentes, **caractérisé en ce que** le plateau à cloche (1) comprend une portion arrière (8) en saillie vers l'arrière et le matériau non métallique (3) est disposé sur ou dans la portion arrière (8) en saillie vers l'arrière.

20. Pulvérisateur rotatif selon l'une des revendications précédentes, **caractérisé en ce que** la portion arrière (8) en saillie vers l'arrière du plateau à cloche (1) est disposée sur la circonférence sous une forme annulaire et/ou peut être logée dans un évidement frontal (5) de l'anneau d'air de guidage (2).

21. Pulvérisateur rotatif selon l'une des revendications précédentes, **caractérisé en ce que** le matériau non métallique (3) de l'anneau d'air de guidage (2)
- est déformé de façon à s'étendre de manière concave vers le côté du plateau à cloche (1) ou
- s'étend en s'élargissant de manière conique vers le côté du plateau à cloche (1).

22. Pulvérisateur rotatif selon l'une des revendications précédentes, **caractérisé en ce que** le matériau non métallique (3) du plateau à cloche (1)
- est déformé de façon à s'étendre de manière convexe vers le côté de l'anneau d'air de guidage (2) ou
- s'étend en se rétrécissant de manière conique vers le côté de l'anneau d'air de guidage (2).

23. Pulvérisateur rotatif (10) pour la peinture de carrosseries de véhicules automobiles et/ou de leurs pièces de montage selon l'une des revendications précédentes.

24. Plateau à cloche (1) du pulvérisateur rotatif (10) selon l'une des revendications précédentes, sur le corps de base (1.1) duquel le matériau non métallique (3) est appliqué.

25. Anneau d'air de guidage (2) du pulvérisateur rotatif (10) selon l'une des revendications 1 à 23, sur le corps de base (2.1) duquel le matériau non métallique (3) est appliqué.

26. Procédé permettant de munir le plateau à cloche (1) et/ou l'anneau d'air de guidage (2) d'un pulvérisateur rotatif (10) selon l'une des revendications 1 à 23 d'un matériau non métallique (3), le corps de base métallique (1.1 ; 2.1) du plateau à cloche (1) et/ou de l'anneau d'air de guidage (2) étant muni, sur son côté externe, du matériau non métallique (3), qui est appliqué sur le corps de base (1.1 ; 2.1) lui-même de façon à éviter, pendant le fonctionnement, un contact métal sur métal indésirable entre le plateau à cloche (1) en rotation et l'anneau d'air de guidage (2).
